# EUROPÄISCHE PATENTANMELDUNG

(11) **EP 3 767 165 A1**
(43) Veröffentlichungstag der Anmeldung: **20.01.2021**
(21) Anmeldenummer: 20168949.4
(22) Anmeldetag: 09.04.2020
(51) Int. Cl.: F21V 5/00, F21V 5/04, F21V 17/00, G02B 19/00, F21Y 115/10

(54) **GEBÄUDELEUCHTE**

(30) Priorität: 19.07.2019 DE 102019119682
(71) Anmelder: ERCO GmbH, 58507 Lüdenscheid (DE)
(72) Erfinder: Bremerich, Matthias, 57368 Lennestadt (DE)
(74) Vertreter: Roche, von Westernhagen & Ehresmann

(57) **Zusammenfassung**

Die Erfindung betrifft unter anderem eine Leuchte (10) zur Ausleuchtung von Gebäudeflächen (44) oder Gebäudeteilflächen, insbesondere Strahler (11), umfassend ein insbesondere zylindrisches Gehäuse (13), in dem wenigstens eine LED (14), ein Kollimator (15), und ein singuläres Linsenelement (16) angeordnet sind, das als Zerstreuungslinse ausgebildet ist, wobei sich das Linsenelement mit seinem Außendurchmesser (17) bis an eine Innenumfangsfläche (18) des Gehäuses (13) heran erstreckt, wobei das Linsenelement eine konkav gekrümmte Lichteintrittsfläche (19) und eine plane oder geringfügig konvex gekrümmte Lichtaustrittsfläche (20) aufweist.

## Beschreibung

Die Erfindung betrifft eine Leuchte nach Anspruch 1.

Die Anmelderin entwickelt und fertigt Leuchten seit Jahrzehnten. Die bekannten Leuchten dienen zur Ausleuchtung einer Gebäudefläche oder einer Gebäudeteilfläche, beispielsweise einer Wandfläche, einer Bodenfläche eines Gebäudes oder einer einem Gebäude zugeordneten Außenfläche, z. B. einer Wegfläche. Als Gebäudeteilfläche werden beispielsweise auch Kunstwerke, wie Gemälde oder Statuen, verstanden, die ebenfalls in einem Gebäude angeordnet sind, oder einem solchen Gebäude zugeordnet sind.

Mit dem grundlegenden Wandel der in derartigen Leuchten verwendeten Leuchtmittel hin zum Betrieb von LEDs und insbesondere auch mit dem Wandel der Leuchtmittel einhergehenden Änderung der Versorgungsspannung von herkömmlich 120/230 Volt Wechselstrom auf Versorgungsspannungen zwischen 20 und 50 Volt, geht eine Miniaturisierung der Bauweise und Konstruktion von Leuchten einher.

Aus der DE 10 2008 063 369 A1 geht eine Leuchte hervor, bei der eine Linsenplatte mit einer Vielzahl von Mikrostrukturen austauschbar angeordnet ist. Durch Austausch der Linsenplatte kann der Lichtverteiler der Leuchte geändert werden.

Ausgehend von der in der eingangs beschriebenen Patentanmeldung offenbarten Leuchte besteht grundsätzlich der Wunsch, eine Leuchte bereitzustellen, die modular aufgebaut werden kann, die mit einfachen Mitteln eine Änderung der Lichtverteilung der Leuchte zulässt, und die bei sehr hoher Effizienz eine qualitativ hochwertige Lichtverteilung generiert.

Die Erfindung löst diese Aufgabe mit den Merkmalen des Anspruches 1.

Das Prinzip der Erfindung besteht im wesentlichen darin, eine Leuchte mit einem singulären Linsenelement auszustatten. Die Leuchte kann ein zylindrisches Gehäuse aufweisen, beispielsweise ein kreiszylindrisches Gehäuse. Das singuläre Linsenelement kann eine kreiszylindrische Außenumfangsfläche aufweisen, und sich mit einem Außendurchmesser bis an die Innenumfangsfläche des Gehäuses heran erstrecken.

Das singuläre Linsenelement weist eine konkav gekrümmte Lichteintrittsfläche und eine plane oder geringfügig konvex gekrümmte Lichtaustrittsfläche auf. Die Eintrittsfläche kann zylindrisch gekrümmt oder doppelt konkav, also sphärisch oder nahezu sphärisch, gekrümmt sein.

Das singuläre Linsenelement weist insoweit eine konkave Lichteintrittsfläche auf, die sich von dem Randbereich an einer Seite des Gehäuses bis zum 180° gegenüberliegenden Randbereich des Gehäuses erstreckt. Das Linsenelement kann damit das gesamte, von dem Kollimator emittierte Licht einfangen.

Mit einer Leuchtenstruktur der erfindungsgemäß vorgeschlagenen Art kann auf einfache Weise eine Änderung der Lichtverteilung der Leuchte erreicht werden. Hierzu muss das Linsenelement nur durch ein anderes Linsenelement mit einer anders ausgebildeten Lichteintrittsfläche ausgetauscht werden.

Das von den LEDs emittierte Licht wird durch den Kollimator erfindungsgemäß kollimiert. Dabei kann der Kollimator bei einer ersten Variante der Erfindung ein paralleles Lichtstrahlenbündel emittieren, das auf die Lichteintrittsfläche des Linsenelementes geworfen wird. Bei einer Alternative der Erfindung kann ein Kollimator verwendet werden, der das von den LEDs emittierte Licht derartig stark kollimiert, dass ein fokussiertes Lichtstrahlenbündel emittiert wird, welches in einem Brennpunkt oder in einem Brennpunktbereich gebündelt wird. Der Brennpunkt oder der Brennpunktbereich kann beispielsweise auf der optischen Achse der Leuchte liegen. Das Linsenelement ist zwischen dem Kollimator und dem Brennpunkt oder dem Brennpunktbereich angeordnet, und kann das auf ihn treffende Lichtstrahlenbündel aufspreizen. Das Linsenelement wirkt insoweit als eine Zerstreuungslinse.

Je stärker die konkave Krümmung der Lichteintrittsfläche des Linsenelementes ist, umso stärker ist die Streuungswirkung. Mit unterschiedlichen Linsenelementen, die unterschiedliche gekrümmte Lichteintrittsflächen aufweisen, können damit unterschiedliche Abstrahlwinkel der Leuchte erreicht werden. Beispielsweise kann durch Austausch eines Linsenelementes eine Spot-, eine Flood-, eine Wideflood- oder auch eine ovale Lichtverteilung generiert werden.

Die Leuchte kann ein Gehäuse aufweisen, mit einem Gehäuseabschnitt, der das Linsenelement trägt. Der Gehäuseabschnitt kann von den übrigen Gehäuseteilen abnehmbar, beispielsweise abclippsbar oder abschraubbar ausgebildet sein. Das Linsenelement kann von Abschnitten des Gehäuses auch übergriffen oder überfangen und damit an dem Gehäuse der Leuchte gehalten werden.

Dadurch, dass die erfindungsgemäße Leuchte nur noch ein einziges Linsenelement aufweist, das singuläre Linsenelement, besteht auch die Möglichkeit, mit sehr einfachen Mitteln ungewünschte Streulichtanteile zu vermeiden:
Es besteht erfindungsgemäß nämlich insbesondere die Möglichkeit, dass die Außenumfangsfläche des Linsenelementes geschwärzt wird. Hierdurch werden Totalreflektionen in diesem Bereich gänzlich unterbunden, und Streulichtanteile, die ansonsten nicht zu vermeiden wären, vollständig unterdrückt.

Die erfindungsgemäße Leuchte ermöglicht damit die Erzielung einer Lichtverteilung, wie sie in ähnlicher Weise unter dem Begriff "Darklight", in der Reflektortechnik, von anderen Leuchten her bekannt ist, bei der unerwünschte Streulichteffekte eliminiert sind.

Gemäß der Erfindung wird eine Leuchte bereitgestellt mit einem sehr großen Linsenelement. Dieses kann einen Außendurchmesser aufweisen, der so groß oder nahezu so groß ist, wie der Innenumfangsdurchmesser des Gehäuses. Damit kann das Linsenelement eine Erstreckung aufweisen, die der Erstreckung der Lichtaustrittsfläche des Kollimators entspricht, oder nahezu entspricht. Damit kann insbesondere eine effiziente Verarbeitung des Lichtes innerhalb der Leuchte erfolgen.

Durch die plane oder im wesentlichen plane oder geringfügig gewölbte Lichtaustrittsfläche des Linsenelementes kann auch für unterschiedliche Linsenelemente und unterschiedliche gekrümmte Lichteintrittsflächen der Linsenelemente eine gleiche Gestaltung oder ähnliche äußere Gestaltung der Leuchte, und damit ein homogenes Ansehverhalten erreicht werden. Der Leuchte kann man insoweit von außen nicht - oder jedenfalls nicht unbedingt - ansehen, welche Art von Linsenelement verbaut ist. Damit können von außen gleich oder sehr ähnlich aussehende Leuchten verwendet werden, die unterschiedliche Lichtverteilungen generieren. Dies ermöglicht beispielsweise, wenn eine Vielzahl von Leuchten mit unterschiedlichen Lichtverteilungen nebeneinander montiert ist, die Erzielung unterschiedlicher Lichtverteilungen der einzelnen Leuchten, ohne dass äußerlich unterschiedliche Leuchten verwendet werden.

Die Erfindung betrifft gemäß einem weiteren Aspekt eine Leuchte nach Anspruch 2.

Die Erfindung geht wieder aus von einer Leuchte, wie sie in der eingangs beschriebenen Patentanmeldung der Anmelderin offenbart ist.

Wiederum liegt der Erfindung die Aufgabe zugrunde, eine Leuchte bereitzustellen, die modular aufgebaut werden kann, die mit einfachen Mitteln eine Änderung der Lichtverteilung der Leuchte zulässt, und die bei sehr hoher Effizienz eine qualitativ hochwertige Lichtverteilung generiert.

Die Erfindung löst diese Aufgabe mit den Merkmalen des Anspruches 2.

Das Prinzip der Erfindung besteht darin, ein singuläres Linsenelement vorzusehen, wobei das Linsenelement eine geschwärzte Außenumfangsfläche aufweist. Die Außenumfangsfläche ist insbesondere von einer zylindrischen Außenumfangsfläche bereitgestellt. Das Linsenelement kann z. B. einen kreisförmigen Querschnitt aufweisen.

Durch die Schwärzung der Außenumfangsfläche wird in diesem Bereich eine Totalreflektion vermieden. Streulichtanteile, die bei Leuchten des Standes der Technik auftreten konnten, werden auf diese Weise sicher vermieden. Damit wird eine sehr hohe Lichteffizienz erreicht.

Die Erfindung betrifft gemäß einem weiteren Aspekt eine Leuchte nach Anspruch 3.

Wiederum geht die Erfindung aus von einer Leuchte, wie sie in der eingangs erwähnten Patentanmeldung der Anmelderin beschrieben ist.

Wiederum besteht die Aufgabe der Erfindung darin, eine Leuchte bereitzustellen, die modular aufgebaut werden kann, die mit einfachen Mitteln eine Änderung der Lichtverteilung der Leuchte zulässt, und die bei sehr hoher Effizienz eine qualitativ hochwertige Lichtverteilung generiert.

Die Erfindung löst diese Aufgabe mit den Merkmalen des Anspruches 3.

Das Prinzip der Erfindung besteht im wesentlichen darin, eine Leuchte bereitzustellen, die einen Kollimator aufweist, der - anders, als im Stand der Technik - kein paralleles Lichtstrahlenbünden emittiert, sondern das Licht in einem Brennpunkt oder einem Brennpunkbereich bündelt. Dabei ist der Brennpunkt oder der Brennpunktbereich insbesondere auf oder nahe der optischen Achse des Kollimators angeordnet.

Die Betrachtung, dass das Licht in einem Brennpunkt gebündelt wird, gilt insbesondere nur für solche Lichtanteile, die entlang eines Bereiches auf der Eingangsseite des Kollimators emittiert werden, der ebenfalls auf der optischen Achse des Kollimators angeordnet ist. Bei einer Betrachtung einer realen, tatsächlichen Erstreckung einer LED-Lichtquelle sind unterschiedliche LED-Lichtanteile zu berücksichtigen, die unter unterschiedlichen Eintrittswinkeln in die optisch aktiven Grenzflächen des Kollimators eintreten, und zu einer gewissen Verschmierung oder Verbreiterung des Brennpunktes oder des Brennpunktbereiches führen kann.

Der Kollimator der erfindungsgemäßen Leuchte weist insbesondere eintrittsseitig eine Höhlung auf, die die LED oder die Gruppe von LEDs übergreift. Die Höhlung kann von einer Deckenwand und von einer Seitenwand bereitgestellt sein. Die Deckenwand kann plan oder konvex gekrümmt ausgebildet sein, und mit einem gegenüberliegenden, auf der Lichtaustrittsseite des Kollimators angeordneten zentralen Abschnitt eine Sammellinse, insbesondere eine bi-konvexe Sammellinse, ausbilden.

Die Seitenwandbereiche der Höhlung sind von einer Totalreflektionsfläche umgeben. Die Totalreflektionsfläche kann die gesamte äußere Seitenwandung des Kollimators bereitstellen und z. B. im wesentlichen eine Schalenform ausbilden.

Die in den Ansprüchen 1, 2 und 3 geschilderten Aspekte können auch beliebig miteinander kombiniert werden. Jede Art von Kombination der in den Ansprüchen 1, 2 und 3 beschriebenen Merkmale stellt Ausführungsformen der verschiedenen in dieser Patentanmeldung beschriebenen Erfindung dar.

Gemäß einer besonders vorteilhaften Variante der Erfindung ist die Totalreflektionsfläche nach Art einer Fresnel-Linse ausgebildet, und in mehrere, gestufte Abschnitte unterteilt.

Gemäß einer weiter vorteilhaften Ausgestaltung der Erfindung weist das Linsenelement eine geschwärzte Außenumfangsfläche auf. Hierdurch können ungewünschte Streulichteffekte vermieden werden.

Gemäß einer weiteren vorteilhaften Ausgestaltung der Erfindung ist das Linsenelement lösbar an dem Gehäuse festlegbar. Hierdurch kann eine einfache Handhabung einer Austauschbarkeit des Linsenelementes zur Erzielung einer geänderten Lichtverteilung der Leuchte erreicht werden.

Gemäß einer weiteren vorteilhaften Ausgestaltung der Erfindung ist das Linsenelement austauschbar ausgebildet. Hierdurch wird eine Leuchte bereitgestellt, die durch bloßen Austausch eines Linsenelementes die Erzeugung einer geänderten Lichtverteilung ermöglicht.

Gemäß einer weiteren vorteilhaften Ausgestaltung der Erfindung ist das Linsenelement rotationssymmetrisch ausgebildet. Dies ermöglicht die Bereitstellung einer Spot-, Flood-, oder Wideflood-Lichtverteilung.

Insbesondere kann vorgesehen sein, dass ein erstes Linsenelement rotationssymmetrisch ausgebildet ist, und ein zweites Linsenelement ebenfalls rotationssymmetrisch ausgebildet ist. Die beiden Linsenelemente können in ihrem Montagezustand an der Leuchte unterschiedliche Lichtverteilungen, z. B. unterschiedliche Abstrahlwinkel, erzeugen. So kann beispielsweise mit einem ersten Linsenelement eine erste enge Lichtverteilung, z. B. eine Spot-Lichtverteilung, und mit einem zweiten Linsenelement im montierten Zustand eine demgegenüber verbreiterte Lichtverteilung, z. B. eine Flood- oder Wideflood-Lichtverteilung, mit einem entsprechend größeren Abstrahlwinkel generiert werden.

Gemäß einer weiteren vorteilhaften Ausgestaltung der Erfindung ist das Linsenelement rotationsasymmetrisch ausgebildet, und stellt eine ovale Lichtverteilung bereit. Das rotationsasymmetrisch ausgebildete Linsenelement kann eine zylindrische, konkav gekrümmte Lichteintrittsfläche aufweisen, und das Licht in einer Richtung entlang einer Ebene aufspreizen, und das Licht entlang einer zweiten Ebene, die zu der ersten Ebene senkrecht ausgerichtet ist, unbeeinflusst durchlassen, oder unter einem anderen, geringeren Winkel aufspreizen.

Gemäß einer weiteren vorteilhaften Ausgestaltung der Erfindung weist das Linsenelement eine kuppelartig konkav gewölbte Lichteintrittsfläche auf. Hierdurch besteht die Möglichkeit, eine rotationssymmetrische Lichtverteilung der Leuchte mit einfachen Mitteln zu erreichen.

Gemäß einer weiteren vorteilhaften Ausgestaltung der Erfindung weist das Linsenelement eine zylindrisch konkav gewölbte Lichteintrittsfläche auf. Dies ermöglicht mit konstruktiv einfachen Mitteln die Bereitstellung einer Leuchte mit einer rotationsasymmetrischen Lichtverteilung, z. B. einer ovalen Lichtverteilung.

Gemäß einer weiteren vorteilhaften Ausgestaltung der Erfindung weist der Kollimator eine die LED übergreifende Höhlung mit einer Lichteintrittsfläche auf. Dies bietet bei einfacher Konstruktion die Möglichkeit, das gesamte, von den LEDs emittierte Licht einzufangen, und damit eine sehr effiziente Leuchte bereitzustellen.

Gemäß einer weiteren vorteilhaften Ausgestaltung der Erfindung umfasst die Höhlung eine Deckenwand, der an einer Lichtaustrittsfläche des Kollimators ein zentraler Abschnitt gegenüberliegt, wobei die Deckenwand mit dem zentralen Abschnitt eine Sammellinse, z. B. eine bi-konvexe Sammellinse, ausbildet. Sämtliche Lichtanteile, die von der LED ausgehend an die Deckenwand treffen, werden von dort zu dem zentralen Abschnitt geleitet. Sowohl die Deckenwand der Höhlung als auch der zentrale Abschnitt sind konvex gekrümmt, und bewirken insoweit eine Bündelung der Lichtanteile.

Gemäß einer weiteren vorteilhaften Ausgestaltung der Erfindung ist eine Seitenwand der Höhlung von einer Totalreflektionsfläche umgeben. Bei einer ersten Variante der Erfindung ist die Totalreflektionsfläche im wesentlichen schalenförmig ausgebildet. Bei einer alternativen Ausgestaltung der Erfindung ist die Totalreflektionsfläche nach Art einer Fresnel-Linse ausgebildet und insbesondere in mehrere Totalreflektionsflächenabschnitte unterteilt.

Eine vorteilhafte Ausführungsform der Erfindung ist dadurch gekennzeichnet, dass die Totalreflektionsfläche nach Art einer Fresnel-Linse ausgebildet ist.

Dies bietet die Möglichkeit einer optimalen Lichtweiterleitung und Bündelung des Lichtes.

Die Bereitstellung einer Totalreflektionsfläche nach Art einer Fresnel-Linse bietet darüber hinaus die Möglichkeit der Erzielung einer sehr geringen axialen Bauhöhe der Leuchte, so dass ein höherer Grad an Miniaturisierung der Leuchte erreicht werden kann.

Gemäß einer weiteren vorteilhaften Ausgestaltung der Erfindung ist der Kollimator dazu ausgebildet, Licht in einem Brennpunkt oder in einem Brennpunktbereich zu bündeln. Dies ermöglicht die Erzielung einer sehr hohen Effizienz der Leuchte.

Gemäß einer weiteren vorteilhaften Ausgestaltung der Erfindung ist das Linsenelement zwischen dem Kollimator und dem Brennpunkt oder dem Brennpunkbereich angeordnet. Dies ermöglicht die Bereitstellung einer sehr effizienten, kleinbauenden, insbesondere in Axialrichtung kurzbauenden Leuchte.

Gemäß einer weiteren vorteilhaften Ausgestaltung der Erfindung weist das Linsenelement einen Außendurchmesser auf, der einem Außendurchmesser des Kollimators entspricht oder im wesentlichen entspricht. Dies bietet die Möglichkeit einer besonders einfachen Konstruktion einer erfindungsgemäßen Leuchte, insbesondere unter Berücksichtigung des Umstandes, dass hierdurch auch eine Skalierbarkeit der Leuchte, bei unverändertem Aufbau, für unterschiedliche Größen der Leuchte, also beispielsweise für unterschiedliche Durchmesser der Gehäuse, möglich ist.

Darüber hinaus kann mit dieser Bauform eine besonders effiziente Leuchte bereitgestellt werden.

Gemäß einer weiteren vorteilhaften Ausgestaltung der Erfindung ist das Linsenelement nahe einer Lichtaustrittsöffnung des Gehäuses angeordnet. Dies ermöglicht eine besonders kleine Bauweise der erfindungsgemäßen Leuchte.

Gemäß einer weiteren vorteilhaften Ausgestaltung der Erfindung weist das Gehäuse im Bereich seiner Lichtaustrittsöffnung eine Ringstirnfläche auf. Die Lichtaustrittsfläche des Linsenelementes kann bündig oder nahezu bündig zu der Ringstirnfläche angeordnet sein, oder relativ zu der Ringstirnfläche geringfügig nach innen versetzt angeordnet sein. Damit wird die Möglichkeit bereitgestellt, eine axial sehr kurz bauende Leuchte zu konstruieren.

Gemäß einer weiteren vorteilhaften Ausgestaltung der Erfindung ist zwischen dem Kollimator und dem Linsenelement eine Streuscheibe angeordnet. Diese kann beispielsweise zur Verhinderung einer Schlierenbildung eine geringe Diffusität auf den Lichtstrom aufzwingen und das Licht insgesamt weicher zeichnen.

Die Erfindung betrifft des weiteren gemäß Anspruch 14 ein System von Gebäudeleuchten.

Der Erfindung liegt die Aufgabe zugrunde, ein System bereitzustellen, mit dem in konstruktiv einfacher Bauform Leuchten mit unterschiedlichen Abstrahlcharakteristiken bereitgestellt werden können.

Die Erfindung löst diese Aufgabe mit den Merkmalen des Anspruches 14.

Zur Vermeidung von Wiederholungen wird zur Erläuterung der Merkmale des Anspruches 14 und zur Erläuterung der erfindungsgemäßen Besonderheiten und Vorteile auf die vorherigen Ausführungen verwiesen.

Dadurch, dass das System eine Leuchte mit zwei (oder mehreren) unterschiedlichen Linsenelementen umfasst, und ein Linsenelement durch ein anderes Linsenelement ausgetauscht werden kann, kann die Lichtverteilung der Leuchte auf denkbar einfache Weise geändert werden. Dabei können rotationssymmetrische Linsenelemente mit unterschiedlichen Abstrahlwinkeln oder rotationsasymmetrische Lichtverteilungen, z. B. zur Erzielung einer ovalen Lichtverteilung, eingesetzt werden.

Weitere Vorteile der Erfindung ergeben sich aus den nicht zitierten Unteransprüchen, sowie anhand der nachfolgenden Beschreibung der in den Zeichnungen dargestellten Ausführungsbeispiele. Darin zeigen:
- Fig. 1: in einer schematischen perspektivischen teilgeschnittenen Ansicht einen Gebäuderaum, an dessen Decke ein Ausführungsbeispiel einer erfindungsgemäßen Leuchte montiert ist, und auf einer Seitenwand des Gebäudes eine erste Lichtverteilung generiert,
- Fig. 2: in einer Darstellung gemäß Fig. 1 ein weiteres Ausführungsbeispiel einer erfindungsgemäßen Gebäudeleuchte, bei der unter Verwendung eines anderen Linsenelementes mittels der Gebäudeleuchte eine geänderte Lichtverteilung auf der auszuleuchtenden Gebäudewand generiert wird,
- Fig. 3: in einer teilgeschnittenen schematischen Ansicht ein Ausführungsbeispiel einer erfindungsgemäßen Gebäudeleuchte, unter Darstellung des Gehäuses, des Kollimators und des Linsenelementes, wobei eine erste Lichtverteilung mit einem ersten Abstrahlwinkel generiert wird,
- Fig. 4: ein weiteres Ausführungsbeispiel einer erfindungsgemäßen Gebäudeleuchte in einer Darstellung gemäß Fig. 3, wobei unter Verwendung eines zweiten, gegenüber dem ersten Linsenelement unterschiedlichen Linsenelementes eine zweite, geänderte Lichtverteilung mit einem zweiten Abstrahlwinkel generiert wird,
- Fig. 5a: in einer schematischen Ansicht ein Ausführungsbeispiel eines dritten Linsenelementes, welches eine zylindrisch gewölbte Lichteintrittsfläche aufweist, und der Erzeugung einer ovalen Lichtverteilung dient,
- Fig. 5b: das Linsenelement der Fig. 5a in einer teilgeschnittenen schematischen Ansicht etwa entlang Schnittlinie Vb-Vb in Fig. 5a,
- Fig. 5c: in einer Darstellung gemäß Fig. 3 ein weiteres Ausführungsbeispiel einer erfindungsgemäßen Gebäudeleuchte unter Verwendung des Linsenelementes der Fig. 5a,
- Fig. 5d: in einer Darstellung gemäß Fig. 3 das Ausführungsbeispiel der Fig. 5c etwa entlang Schnittlinie Vd-Vd in Fig. 5c,
- Fig. 6a: ein weiteres Ausführungsbeispiel einer erfindungsgemäßen Gebäudeleuchte unter Verwendung eines Kollimators, der Licht in einem Brennpunkt bündelt, wobei zur Vereinfachung der Darstellung das Linsenelement nicht dargestellt ist,
- Fig. 6b: ein weiteres Ausführungsbeispiel einer erfindungsgemäßen Gebäudeleuchte in einer Darstellung gemäß Fig. 6a unter Verwendung eines geänderten Kollimators mit einer gegenüber Fig. 6a größeren Brennweite,
- Fig. 7: ein weiteres Ausführungsbeispiel einer erfindungsgemäßen Gebäudeleuchte unter Verwendung des Kollimators der Fig. 6a mit zusätzlich dargestelltem Linsenelement,
- Fig. 8: ein weiteres Ausführungsbeispiel einer erfindungsgemäßen Gebäudeleuchte in einer Darstellung gemäß Fig. 7 mit einem gegenüber Fig. 7 geänderten Linsenelement unter Erzielung einer geänderten Lichtverteilung,
- Fig. 9: in einer Darstellung gemäß Fig. 7 ein weiteres Ausführungsbeispiel einer erfindungsgemäßen Gebäudeleuchte unter Verwendung eines Licht in einem Brennpunkt bündelnden Kollimators, dessen Totalreflektionsfläche nach Art einer Fresnel-Linse ausgebildet ist, und
- Fig. 10: ein weiteres Ausführungsbeispiel einer erfindungsgemäßen Gebäudeleuchte in einer Darstellung gemäß Fig. 9, wobei im Lichtpfad zwischen dem Kollimator und dem Linsenelement eine Streuscheibe angeordnet ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

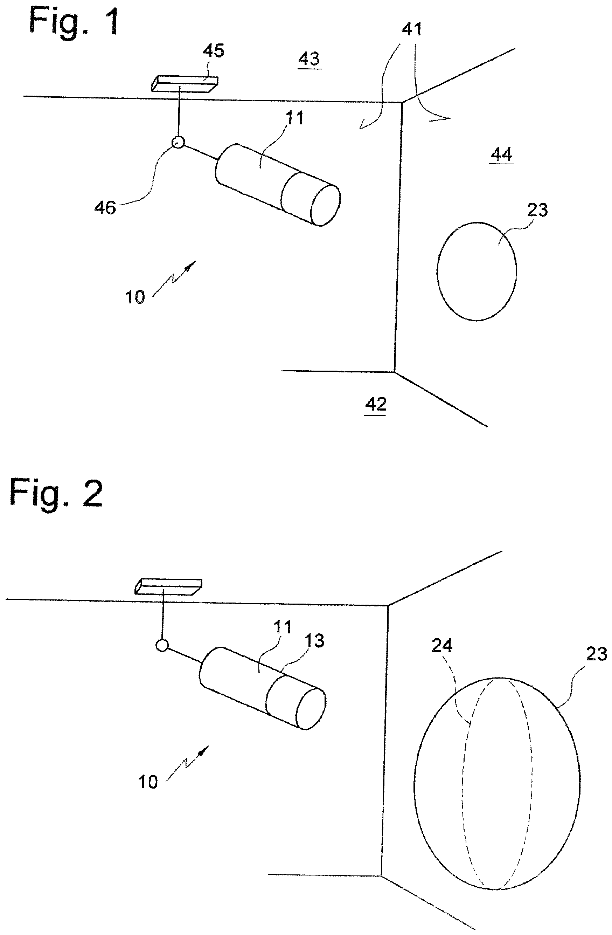

Ein erstes Ausführungsbeispiel einer in ihrer Gesamtheit in den Zeichnungen mit 10 bezeichneten Leuchte wird zunächst anhand der Figuren 1 und 2 erläutert werden:
Fig. 1 zeigt in einer schematischen Ansicht einen Gebäuderaum, wobei die als Strahler 11 ausgebildete Leuchte an der Decke 43 eines Raumes eines Gebäudes angeordnet ist. Der Raum weist zwei Seitenwände 41 auf und eine Bodenwand 42. Die auszuleuchtende Wand ist mit 44 bezeichnet.

Wie eingangs erwähnt, können mit der erfindungsgemäßen Leuchte auch Bodenflächen oder Kunstwerke oder Außenflächen ausgeleuchtet werden.

Bei dem Ausführungsbeispiel der Fig. 1 wird auf der auszuleuchtenden Wand 44 eine rotationssymmetrische, insbesondere beispielsweise kreisförmige Lichtverteilung 23, z. B. eine Narrow-Spot-Verteilung, generiert.

Die als Strahler 11 ausgebildete Leuchte 10 ist ausweislich Fig. 1 an einer deckenseitig angebrachten Montagevorrichtung 45 gehalten. Es kann sich dabei beispielsweise um eine Stromschiene oder eine andere Art der Anbringung handeln. Angedeutet ist ein Gelenk 46, oder Schwenklager, so dass eine Ausrichtung der Leuchte 10 im Raum und deren Feststellung möglich ist.

Das Ausführungsbeispiel der Fig. 2 zeigt die gleiche Leuchte, wobei ein anderes Linsenelement eingesetzt ist. Durch Einsatz des Linsenelementes kann die Leuchte der Fig. 2 eine geänderte Lichtverteilung 23 generieren, die ebenfalls rotationssymmetrisch ist. Aus einem Vergleich der Figuren 1 und 2 ist unschwer erkennbar, dass die zweite Lichtverteilung 23 gemäß Fig. 2 größer ausgebildet ist, als die Lichtverteilung 23 der Fig. 1, und einen größeren Durchmesser aufweist. Die Lichtverteilung der Fig. 1 kann beispielsweise auch fachüblich als Narrow-Spot-Lichtverteilung, und die Lichtverteilung der Fig. 2 als Spot-Lichtverteilung bezeichnet werden. Wird die Lichtverteilung 23 gegenüber der Darstellung der Fig. 2 noch größer, kann z. B. von einer Flood- bzw. von einer Wideflood-Lichtverteilung gesprochen werden.

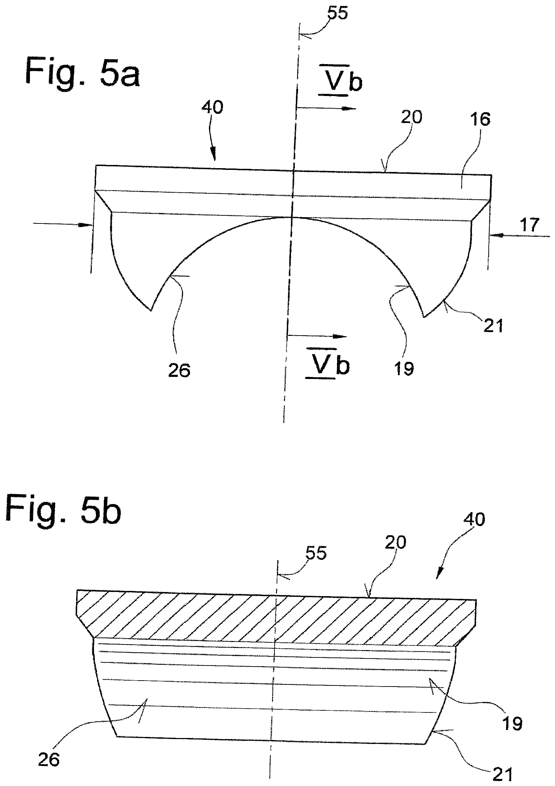

Bei einem weiteren Ausführungsbeispiel der Erfindung kann wiederum ein anderes Linsenelement in der Leuchte 10 verwendet werden, das - erst später im Text - anhand der Ausführungsbeispiele der Figuren 5a bis 5d beschrieben wird. Bei einem solchen Linsenelement kann eine nicht rotationssymmetrische oder rotationsasymmetrische Lichtverteilung generiert werden, die in Fig. 2 als gestricheltes Oval 24 angedeutet ist. Eine solche ovale Lichtverteilung 24 ist lediglich ein Beispiel für beliebige, unterschiedliche und von der Erfindung umfasste, rotationsasymmetrische Lichtverteilungen.

Die Leuchten 10 der Figuren 1 und 2 bilden gemeinsam ein erfindungsgemäßes System von Leuchten. Ein erfindungsgemäßes System von Leuchten wird bereits dadurch gebildet, dass eine Leuchte mit zwei unterschiedlichen Linsenelementen bereitgestellt wird.

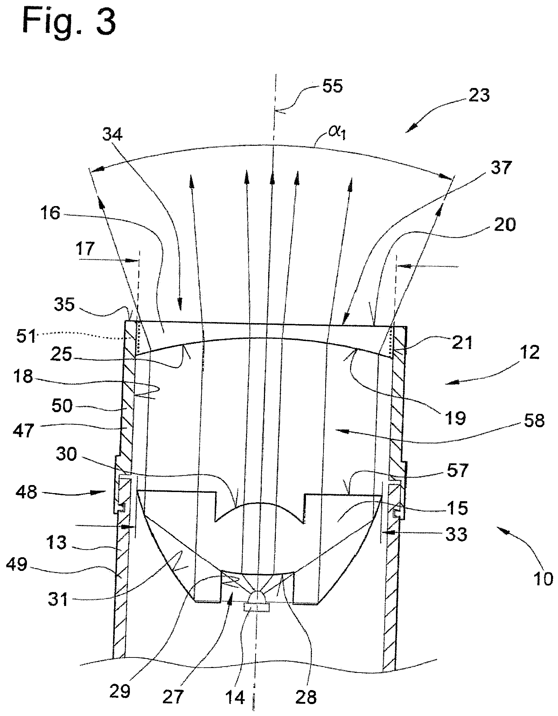

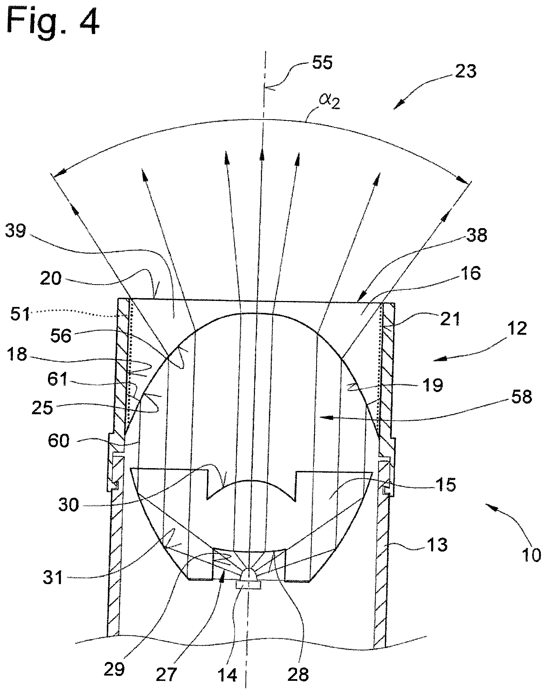

Anhand der Ausführungsbeispiele der Figuren 3 und 4 sollen nun zunächst Einzelheiten der Ausführungsbeispiele von erfindungsgemäßen Leuchten mit einer rotationssymmetrischen Lichtverteilung 23 erläutert werden:
Ausweislich Fig. 3 umfasst die Leuchte 10 ein Gehäuse 13. Dieses kann insbesondere zylindrisch, weiter insbesondere im Querschnitt kreiszylindrisch ausgebildet sein. Im Folgenden wird davon ausgegangen, dass sämtliche, in den Zeichnungen dargestellten Ausführungsbeispiele kreiszylindrische Gehäuse einzeln zeigen, wobei selbstverständlich auch andere Gehäuseformen von der Erfindung umfasst sind.

Ausweislich Fig. 1 weist die Leuchte 10 eine LED 14 auf. Die LED 14 ist - was Fig. 3 aus Gründen der vereinfachten Darstellung nicht zeigt - an einer Leiterplatte angeordnet. Darüber hinaus können Kühlkörper vorgesehen sein, und Montageelemente zur Befestigung der LED am nicht dargestellten Gehäuseboden oder eine andere Art und Weise der Befestigung der LED relativ zu dem Gehäuse 13.

Von der Erfindung ist umfasst, wenn die Ausführungsbeispiele nur eine LED umfassen. Von der Erfindung ist gleichermaßen umfasst, wenn die Leuchten eine Vielzahl oder eine Gruppe von LEDs, ggf. auch farblich unterschiedliche LEDs, umfassen.

Die LED 14 emittiert Licht, beispielsweise mit einer Lambert'schen Verteilung. Der Lichtpfad wird bei dem Ausführungsbeispiel der Fig. 3 durch insgesamt sieben Lichtpfeile schematisch dargestellt.

Der Kollimator 15 umfasst eine Höhlung 27, die die LED 14 übergreift. Die Höhlung 27 weist eine Deckenwand 28 auf, die plan ausgebildet ist, oder - gemäß dem Ausführungsbeispiel der Fig. 3 - geringfügig konvex gekrümmt ist.

Im Bereich der Lichtaustrittsfläche des Kollimators 15 ist der Deckenwand 28 gegenüberliegend ein zentraler Abschnitt 29 angeordnet, der ebenfalls eine konvex gekrümmte Fläche aufweist. Das Flächenpaar von Deckenwand 28 und zentralem Abschnitt 30 bildet insoweit eine Sammellinse aus.

Die umlaufende Seitenwand 29 der Höhlung 27 kann von einer kreiszylindrischen Fläche bereitgestellt sein. Von der Erfindung ist auch umfasst, wenn die Höhlung einen konisch zulaufenden Querschnitt aufweist.

Die von der LED emittierten und durch die umlaufende Seitenwand 29 in den Kollimator 15 eintretenden Lichtanteile gelangen auf eine Totalreflektionsfläche 31, und werden von dort zur Lichtaustrittsfläche 57 des Kollimators 15 gelenkt.

Insbesondere ist der Kollimator 15 derart konzipiert, dass ein im wesentlichen paralleles Lichtstrahlenbündel 58 emittiert wird.

Die von der LED emittierten Lichtanteile werden insoweit in zwei Lichtanteile separiert:
Die auf die Deckenwand 28 treffenden Lichtanteile werden auf den zentralen Abschnitt 30 hingelenkt, und die durch die umlaufende Seitenwand 29 in den Kollimator 15 eintretenden Lichtanteile werden über die Totalreflektionsfläche 31 zur Lichtaustrittsfläche 57 hin gerichtet.

Die Leuchte 10 umfasst gemäß Fig. 3 des weiteren ein im Strahlengang des von dem Kollimator 15 emittierten Lichtes angeordnetes Linsenelement 16. Das Linsenelement 16 ist im Bereich der Lichtaustrittsöffnung 34 des Gehäuses 13 angeordnet. Das Gehäuse 18 kann beispielsweise ein erstes Gehäuseteil 49 und ein zweites Gehäuseteil 50 aufweisen. Das zweite Gehäuseteil 50 kann nach Art einer Kappe oder nach Art eines Abschlussringes ausgebildet sein. Das Gehäuseteil 50 kann als lösbares Gehäuseteil 47 bereitgestellt sein. Über eine lösbare Verbindung 48, z. B. eine lösbare Schraubverbindung oder eine Ringschnappverbindung oder eine Art Bajonettverschluss oder dergleichen, kann eine Lösung des lösbaren Gehäuseteils 47 von dem ersten Gehäuseteil 49 vorgenommen werden.

Das Linsenelement 16 kann an dem abnehmbaren Gehäuseteil 47 befestigt, insbesondere lösbar befestigt, sein.

Gemäß dem Ausführungsbeispiel der Fig. 3 weist das Gehäuse 18 eine Ringstirnfläche 35 auf. Dieses ist zu einer Lichtaustrittsfläche 20 des Linsenelementes 16 im wesentlichen bündig angeordnet. Bei weiteren, in den Zeichnungen nicht dargestellten, Ausführungsbeispielen kann das Gehäuse 18 mit seinem freien Endbereich 35 die Lichtaustrittsfläche 20 auch teilweise überfangen, und auf diese Weise das Linsenelement 16 axial am Gehäuse 13 halten. Das Linsenelement kann darüber hinaus über Befestigungselemente, z. B. durch in den Figuren nicht dargestellte Schnapphaken oder Klemmverschlüsse, an dem Gehäuse 13 festgelegt, insbesondere lösbar festgelegt, sein.

Das Linsenelement 16 weist einen Außendurchmesser 17 auf, der dem Außendurchmesser 33 des Kollimators entspricht, oder im wesentlichen entspricht. Insbesondere ragt das Linsenelement 16 mit seinem Außendurchmesser 17 bis an die Innenumfangsfläche 18 des Gehäuses 13 heran.

Das Linsenelement 16 gemäß Fig. 3 weist eine konkav gekrümmte Lichteintrittsfläche 19 auf. Bei diesem Ausführungsbeispiel ist die Lichteintrittsfläche 19 kuppelartig konkav gekrümmt, beispielsweise sphärisch oder asphärisch gekrümmt, so dass die Eintrittsfläche 19 des Linsenelementes 16 eine insgesamt kuppelartige gewölbte Lichteintrittsfläche 35 bereitstellt.

Das Linsenelement 16 der Fig. 3 wird als erstes rotationssymmetrisches Linsenelement 37 bezeichnet. Demgegenüber zeigt das Ausführungsbeispiel der Leuchte 10 gemäß Fig. 4 ein zweites, demgegenüber geändertes rotationssymmetrisches Linsenelement 38.

Wiederum ist die Lichtaustrittsfläche 20 des Linsenelementes 38 (wie gleichermaßen bei dem ersten Linsenelement 37) plan gehalten. Die Lichteintrittsfläche 19 des Linsenelementes 38 gemäß Fig. 4 ist ebenfalls konkav gekrümmt und weist insgesamt eine kuppelartig gewölbte Lichteintrittsfläche 25 auf.

Allerdings weist die Lichteintrittsfläche 19 des zweiten Linsenelementes 38 gemäß Fig. 4 eine gegenüber der Krümmung des Linsenelementes 16 gemäß Fig. 3, geänderte Krümmung auf.

Ausweislich Fig. 3 und 4 wirken die beiden Linsenelemente 37, 38 jeweils als Zerstreuungslinse. Ein parallel auf das Linsenelement 37, 38 einfallendes Lichtstrahlenbündel 58 wird aufgespreizt. Bei dem Ausführungsbeispiel der Fig. 3 erfolgt eine Aufspreizung unter einem Abstrahlwinkel α₁ und bei dem Ausführungsbeispiel der Fig. 4 aufgrund der stärkeren Krümmung der Lichteintrittsfläche 19 eine stärkere Spreizung zu einem größeren Abstrahlwinkel α₂.

Bei der Leuchte 10 gemäß Fig. 1 wird insoweit beispielsweise ein Linsenelement 37 gemäß Fig. 1 verwendet, wohingegen bei dem Ausführungsbeispiel der Fig. 2 ein Linsenelement 38 gemäß Fig. 4 eingesetzt wird.

Angemerkt sei, dass die Figuren nicht maßstäblich, sondern lediglich schematisch und als Prinzipzeichnungen zu verstehen sind.

Durch Austausch des Linsenelementes bzw. ein Austausch eines Kappenelementes 47, 50 mit daran befestigtem Linsenelement 37, 38 kann insoweit die Lichtverteilung 23 der Leuchte 10 auf denkbar einfache Weise geändert werden.

Anhand der Figuren 5a bis 5d soll nun ein Ausführungsbeispiel eines Linsenelementes 16 und einer Leuchte erläutert werden, mit der eine rotationsasymmetrische Lichtverteilung 24 generiert werden kann.

Die Figuren 5a bis 5d zeigen insoweit ein rotationsasymmetrisches Linsenelement 40, welches eine ovale Lichtverteilung 24 gemäß Fig. 2 (dort gestrichelt) erzeugen kann.

Das Linsenelement 40 gemäß den Figuren 5a bis 5d weist eine zylindrisch - konkav - gewölbte Lichteintrittsfläche 26 auf. Diese ist aufgrund der Ansicht der Fig. 5a und der Schnittdarstellung der Fig. 5b deutlich zu erkennen.

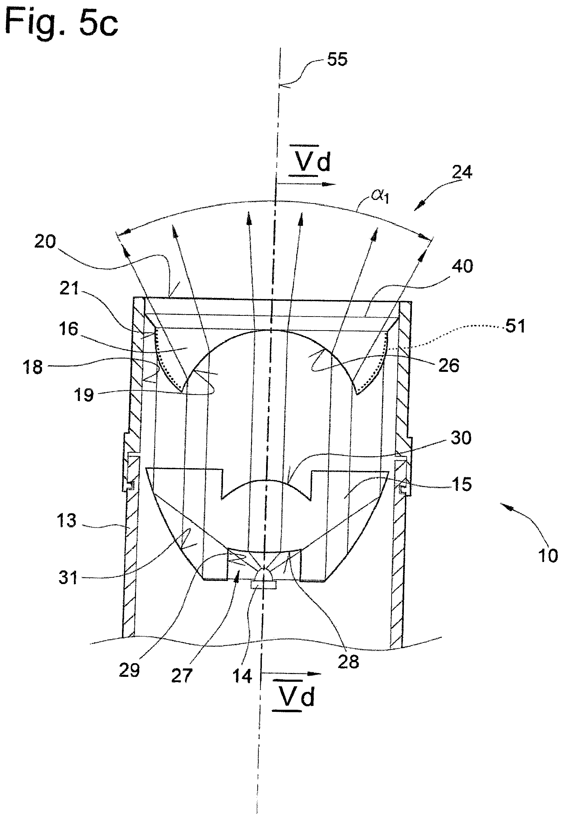

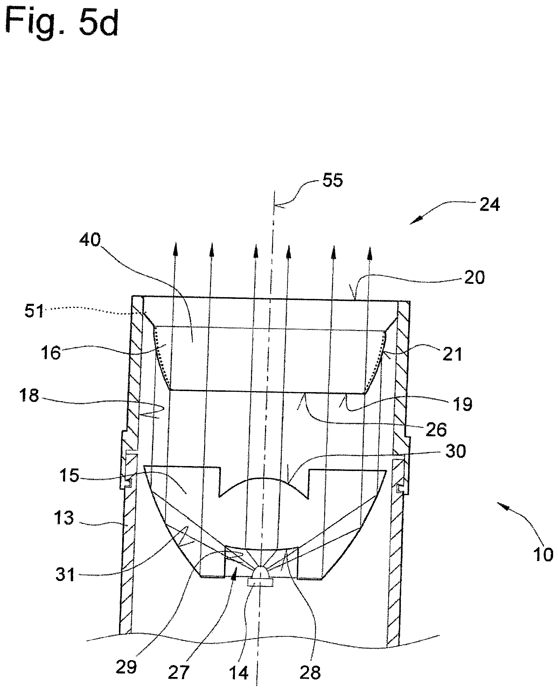

Das Linsenelement der Figuren 5a und 5b wird bei dem Ausführungsbeispiel einer Leuchte gemäß Fig. 5c und 5d eingesetzt. Man erkennt an den beiden unterschiedlichen Schnittebenen der Fig. 5c und 5d die unterschiedlichen Lichtverteilungen entlang der beiden unterschiedlichen Papierebenen.

Die Fig. 5d zeigt - entsprechend der Papierebene in der Fig. 5b - dass das vom Kollimator 15 emittierte parallele Lichtstrahlenbündel ohne eine Änderung zu erfahren, durch das Linsenelement 40 hindurch tritt.

Bei Betrachtung der Fig. 5c wird allerdings deutlich, dass in einer Schnittebene senkrecht zu der Papierebene der Fig. 5d, eine Aufspreizung des Lichtes unter einem Winkel α₁ erfolgt. Damit wird insgesamt eine ovale Lichtverteilung erreichbar.

Durch Austausch eines rotationssymmetrischen Linsenelementes 39 z. B. gemäß Fig. 4 durch ein rotationsasymmetrisches Linsenelement 40 gemäß Fig. 5a, 5b, kann insoweit die Leuchte durch einen Umbau statt einer rotationssymmetrischen Lichtverteilung 23 eine rotationsasymmetrische Lichtverteilung 24 erzeugen.

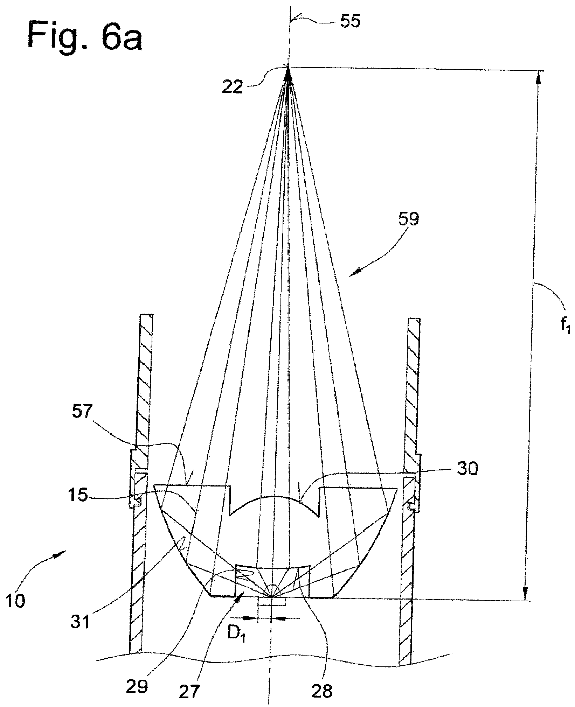

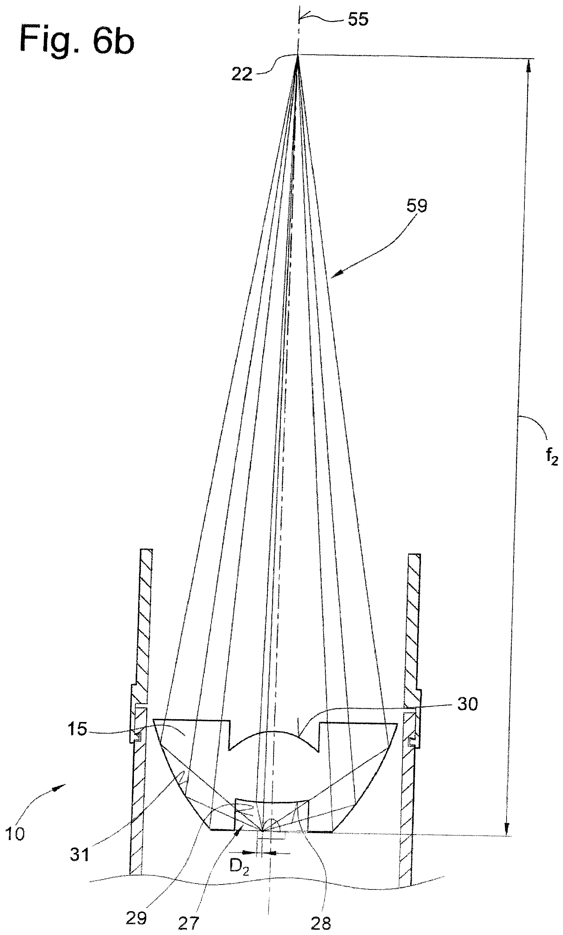

Anhand der Figuren 6a und 6b soll nun für ein weiteres Ausführungsbeispiel einer erfindungsgemäßen Leuchte erläutert werden, dass ein geänderter Kollimator 15 eingesetzt werden kann:
Der Grundaufbau einer Leuchte gemäß den Figuren 6a und 6b entspricht dem Aufbau der anhand von Fig. 3 und 4 erläuterten Leuchte, wobei in den Darstellungen der Figuren 6a und 6b das Linsenelement der Übersichtlichkeit halber weggelassen worden ist.

Auch der Grundaufbau des Kollimators 15 gemäß den Figuren 6a und 6b entspricht im wesentlichen dem Grundaufbau des Kollimators 15, wie er bei der Leuchte gemäß den Figuren 3 und 4 eingesetzt wird.

Hier ist allerdings durch eine geänderte Wahl der optischen Grenzflächen des Kollimators 15, namentlich der Lichteintrittsflächen 28, 29, der Totalreflektionsflächen 31 und der Lichtaustrittsflächen 57, insbesondere des zentralen Abschnitts 30, erreicht, dass das von dem Kollimator 15 gemäß Fig. 6a emittierte Lichtstrahlenbündel 59 kein Bündel parallelen Lichtes bereitstellt, sondern als auf einen Brennpunkt oder Fokus 22 hin gerichtetes Lichtstrahlenbündel generiert wird. Dabei kann, wie sich durch Vergleich der Fig. 6a und 6b zeigt, durch eine geänderte Wahl der optischen Grenzflächen des Kollimators 15 eine unterschiedliche Brennweite f₁ oder f₂ eingestellt werden.

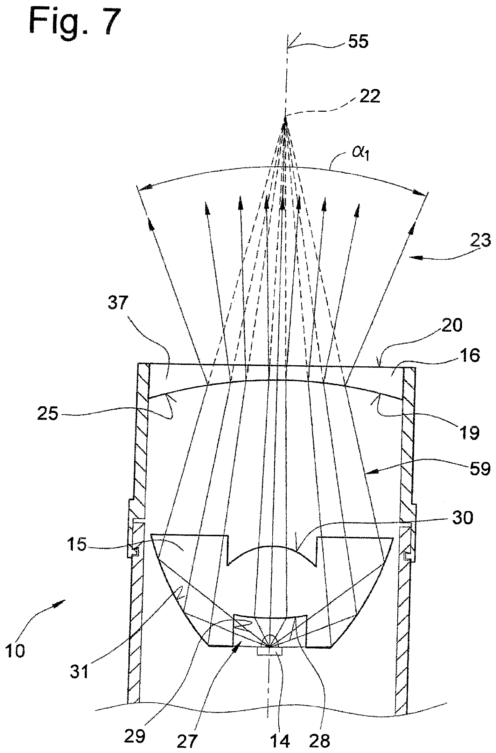

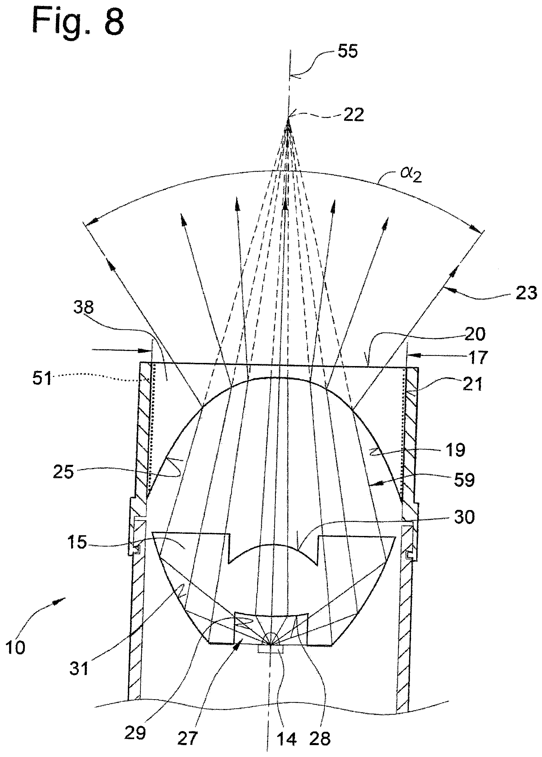

Anhand der Ausführungsbeispiele der Figuren 7 und 8 wird deutlich, dass bei weiteren Ausführungsbeispielen erfindungsgemäßer Leuchten 10 gemäß der Figuren 7 und 8 Linsenelemente 37, 38 - die den Linsenelementen der Ausführungsbeispiele der Fig. 3 und 4 entsprechen - in das Lichtstrahlenbündel 59 eingesetzt werden können und derart positioniert werden können, dass das Linsenelement 37, 38 zwischen Kollimator 15 und Brennpunkt 22 liegt.

Der entsprechende Strahlengang wird in den Figuren 7 und 8 schematisch angedeutet. Man erkennt, dass das jeweilige Linsenelement 37, 38 mit seiner jeweiligen Lichteintrittsfläche 19 das gesamte, von dem Kollimator 15 emittierte Lichtstrahlenbündel 59 einfangen kann.

Der Vorteil der Verwendung solcher Kollimatorelemente 15 gemäß den Figuren 6a bis 10, die das Licht nicht parallel, sondern als fokussiertes Lichtstrahlenbündel 59 emittieren, wird anhand der Fig. 4 erläutert:
Dort ist deutlich, dass insbesondere bei Verwendung stark gekrümmter Lichteintrittsflächen 19 der Linsenelemente 16 Randstrahlen, wie z. B. der Randstrahl 60, derartig stark nach außen gebrochen werden (vgl. Teilstrahl 61), dass dieser nicht mehr auf die auszuleuchtende Gebäudefläche 44 hin gelenkt werden kann.

Damit sind hier Lichtverluste zu befürchten.

Wird, wie in den Ausführungsbeispielen 7 und 8 angedeutet, aber anders, als in Fig. 4 dargestellt, von dem Kollimator 15 ein zu einem Brennpunkt 22 hin kollimiertes Lichtstrahlenbündel 59 emittiert - und nicht paralleles Lichtstrahlenbündel 58 -, kann der gesamte Lichtstrom von dem Linsenelement 16 eingefangen, verarbeitet, und auf die auszuleuchtende Gebäudewand 44 geworfen werden.

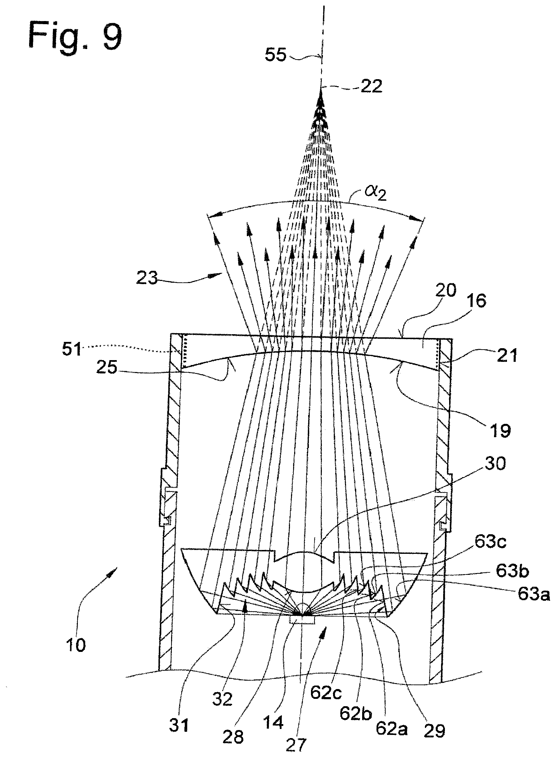

Ausweislich des Ausführungsbeispiels der Fig. 9 wird ein weiteres Ausführungsbeispiel vorgestellt, bei dem die Totalreflektionsfläche 31 des Kollimators 15 nach Art einer Fresnel-Linse 32 ausgebildet ist. Hier ist die Eintrittsfläche 29 der Höhlung 27 in mehrere, im wesentlichen vertikal gerichtete Abschnitte 62a, 62b, 62c, 62 unterteilt, wobei jedem dieser Abschnitte ein Abschnitt 63a, 63b, 63c einer Totalreflektionsfläche zugeordnet ist.

Hierdurch kann die Bauhöhe des Kollimators 15 insbesondere bei großen Durchmessern des Gehäuses 13 gering gehalten werden, so dass auch hier ein hoher Miniaturisierungsgrad erreicht wird.

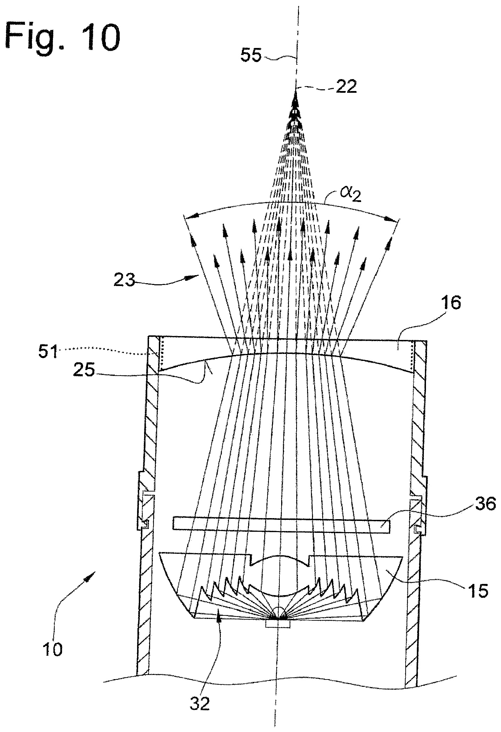

Ausweislich Fig. 10 kann eine Streuscheibe 36 im Lichtweg zwischen Kollimator 15 und Linsenelement 16 angeordnet sein. Eine solche Streuscheibe 36 kann das von dem Kollimator 15 emittierte Licht vergleichmäßigen und beispielsweise Interferenzstrukturen, die z. B. zu einer Schlierenbildung führen können, vermeiden.

Bei zahlreichen Ausführungsbeispielen einer erfindungsgemäßen Leuchte ist die Außenumfangsfläche des Linsenelementes 16 mit 21 bezeichnet, und geschwärzt. Die Schwärzung wird als Punktlinie 51 angedeutet. Bei den Ausführungsbeispielen der Figuren 3 und 4 sowie 7 bis 10 ist die Außenumfangsfläche 21 des jeweiligen Linsenelementes 16 von einer zylindrischen Fläche gebildet. Hier ist diese zylindrische Fläche vollständig geschwärzt, so dass in diesem Bereich insbesondere eine Totalreflektion ausgeschlossen wird.

Die Schwärzung kann beispielsweise als Lackschicht aufgebracht werden.

Erfolgt keine Schwärzung, ist vorstellbar, dass der in Fig. 4 mit 61 bezeichnete Teilstrahl - soweit dessen Einfallswinkel unterhalb des Totalreflektionswinkels liegt - innerhalb des Linsenelementes 16 reflektiert wird und ebenfalls zu Streulichtanteilen führt. Durch die vollständige Schwärzung der Außenumfangsfläche 21 des Linsenelementes können Streulichteffekte vermieden werden.

Auch das rotationsasymmetrische Linsenelement 40 gemäß den Figuren 5a bis 5d hat auf seiner Außenumfangsfläche 21 eine angedeutete Schwärzung 51 erfahren, die beispielsweise durch eine Beschichtung, Lackierung etc. angebracht werden kann.

Die erfindungsgemäße Leuchte und das erfindungsgemäße System von Leuchten ermöglichen eine einfache Skalierbarkeit von Leuchten, von ganz kleinen Leuchten über mittelkleine Leuchten zu mittleren Leuchten, zu großen Leuchten und sehr großen Leuchten. Dabei kann für jede Größe eine Leuchte durch Bereitstellung eines eigenen Linsenelementes eine Vielzahl von rotationssysmmetrischen und rotationsasymmetrischen Lichtverteilungen generiert werden. Als rotationssymmetrische Lichtverteilung kommen beispielsweise Spot-, Flood-, Wide-Flood und Extra-Wide-Flood-Verteilungen in Betracht.

Im Rahmen der Erfindung hat sich herausgestellt, dass es sich bei einer bestimmten Größe einer Leuchte für eine ganz bestimmte Lichtverteilung anbietet, anstelle eines Linsenelementes mit einer konkav gekrümmten Lichteintrittsfläche ein Linsenelement mit einer konvex gekrümmten, aber nur geringfügig konvex gekrümmten, Lichteintrittsfläche bereitzustellen. Ein solches Linsenelement wirkt dann nicht als Zerstreuungslinse sondern als Sammellinse.

Ein erfindungsgemäßes System von Leuchten kann daher zusätzlich auch Leuchten mit Linsenelementen umfassen, die als Sammellinse ausgebildet sind und eine zumindest geringfügig konvex gekrümmte Lichteintrittsfläche aufweisen.

## Patentansprüche

1. Leuchte (10) zur Ausleuchtung von Gebäudeflächen (44) oder Gebäudeteilflächen, insbesondere Strahler (11), umfassend ein insbesondere zylindrisches Gehäuse (13), in dem wenigstens eine LED (14), ein Kollimator (15), und ein singuläres Linsenelement (16) angeordnet sind, das als Zerstreuungslinse ausgebildet ist, wobei sich das Linsenelement mit seinem Außendurchmesser (17) bis an eine Innenumfangsfläche (18) des Gehäuses (13) heran erstreckt, wobei das Linsenelement eine konkav gekrümmte Lichteintrittsfläche (19) und eine plane oder geringfügig konvex gekrümmte Lichtaustrittsfläche (20) aufweist.

2. Leuchte (10) zur Ausleuchtung von Gebäudeflächen (44) oder Gebäudeteilflächen, insbesondere Strahler (11), umfassend ein insbesondere zylindrisches Gehäuse (13), in dem wenigstens eine LED (14), ein Kollimator (15), und ein singuläres Linsenelement (16) angeordnet sind, das als Zerstreuungslinse ausgebildet ist, wobei sich das Linsenelement mit seinem Außendurchmesser (17) insbesondere bis an eine Innenumfangsfläche (18) des Gehäuses (13) heran erstreckt, wobei das Linsenelement eine konkav gekrümmte Lichteintrittsfläche (19) und eine plane oder geringfügig konvex gekrümmte Lichtaustrittsfläche (20) aufweist, und wobei das Linsenelement eine geschwärzte Außenumfangsfläche (21) aufweist.

3. Leuchte (10) zur Ausleuchtung von Gebäudeflächen (44) oder Gebäudeteilflächen, insbesondere Strahler (11), umfassend ein insbesondere zylindrisches Gehäuse (13), in dem wenigstens eine LED (14), ein Kollimator (15), und ein singuläres Linsenelement (16) angeordnet sind, das als Zerstreuungslinse ausgebildet ist, wobei sich das Linsenelement mit seinem Außendurchmesser (17) insbesondere bis an eine Innenumfangsfläche (18) des Gehäuses (13) heran erstreckt, wobei das Linsenelement eine konkav gekrümmte Lichteintrittsfläche (19) und eine plane oder geringfügig konvex gekrümmte Lichtaustrittsfläche (20) aufweist, und wobei der Kollimator (15) dazu ausgebildet ist, Licht in einem Brennpunkt (22) oder in einem Brennpunktbereich zu bündeln.

4. Leuchte nach Anspruch 1 oder 3, **dadurch gekennzeichnet, dass** das Linsenelement (16) eine geschwärzte Außenumfangsfläche (21) aufweist.

5. Leuchte nach einem der vorangegangenen Ansprüche, **dadurch gekennzeichnet, dass** das Linsenelement (16) lösbar an dem Gehäuse (13) festlegbar ist.

6. Leuchte nach einem der vorangegangenen Ansprüche, **dadurch gekennzeichnet, dass** das Linsenelement (16) austauschbar ausgebildet ist.

7. Leuchte nach einem der vorangegangenen Ansprüche, **dadurch gekennzeichnet, dass** das Linsenelement (16, 39) rotationssymmetrisch ausgebildet ist.

8. Leuchte nach einem der Ansprüche 1 bis 6, **dadurch gekennzeichnet, dass** das Linsenelement (16, 40) rotationsasymmetrisch ausgebildet ist und eine ovale Lichtverteilung bereitstellt.

9. Leuchte nach Anspruch 7, **dadurch gekennzeichnet, dass** das Linsenelement (16) eine kuppelartig konkav gewölbte Lichteintrittsfläche (25) aufweist.

10. Leuchte nach Anspruch 8, **dadurch gekennzeichnet, dass** das Linsenelement eine zylindrisch konkav gewölbte Lichteintrittsfläche (26) aufweist.

11. Leuchte nach einem der vorangegangenen Ansprüche, **dadurch gekennzeichnet, dass** der Kollimator (15) eine die LED (14) übergreifende Höhlung (27) mit einer Lichteintrittsfläche (28, 29) aufweist.

12. Leuchte nach Anspruch 11, **dadurch gekennzeichnet, dass** die Höhlung (27) eine Deckenwand (28) umfasst, der an einer Lichtaustrittsfläche des Kollimators ein zentraler Abschnitt (30) gegenüberliegt, wobei die Deckenwand (28) mit dem zentralen Abschnitt (30) eine bi-konvexe Sammellinse ausbildet.

13. Leuchte nach Anspruch 11 oder 12, **dadurch gekennzeichnet, dass** die Höhlung (27) eine Seitenwand (29) umfasst, die von einer Totalreflektionsfläche (31) umgeben ist.

14. System (12) von Gebäudeleuchten (10), insbesondere Strahlern (11), umfassend eine Leuchte mit einem zylindrischen Gehäuse (13), in dem wenigstens eine LED (14), ein Kollimator (15), und ein erstes singuläres Linsenelement (37) angeordnet sind, das als Zerstreuungslinse ausgebildet ist, wobei sich das erste Linsenelement (37) mit seinem Außendurchmesser (17) bis an eine Innenumfangsfläche (18) des Gehäuses (13) heran erstreckt, wobei das erste Linsenelement (37) eine erste, konkav gekrümmte Lichteintrittsfläche (19) und eine plane oder geringfügig konvex gekrümmte Lichtaustrittsfläche (20) aufweist, und wobei das erste Linsenelement (37) zur Erzielung einer geänderten Lichtverteilung der Leuchte durch ein zweites, als Zerstreuungslinse ausgebildetes Linsenelement (38) austauschbar ist, wobei sich das zweite Linsenelement (38) im montierten Zustand mit seinem Außendurchmesser (17) bis an eine Innenumfangsfläche (18) des Gehäuses (13) heran erstreckt, wobei das zweite Linsenelement (38) eine zweite, konkav gekrümmte, zu der ersten Lichteintrittsfläche (19) des ersten Linsenelementes unterschiedlich gekrümmte Lichteintrittsfläche (56) und eine plane oder geringfügig konvex gekrümmte Lichtaustrittsfläche (20) aufweist.

15. System nach Anspruch 14, **dadurch gekennzeichnet, dass** das erste Linsenelement rotationssymmetrisch ausgebildet ist, und dass das zweite Linsenelement rotationssymmetrisch oder rotationsasymmetrisch ausgebildet ist.
